# EUROPÄISCHE PATENTSCHRIFT

(11) **EP 2 019 236 B1**
(45) Veröffentlichungstag und Bekanntmachung des Hinweises auf die Patenterteilung: **14.12.2011**
(21) Anmeldenummer: 08011987.8
(22) Anmeldetag: 03.07.2008
(51) Int. Cl.: F16H 61/688, F16H 61/02, F16H 61/28

(54) **Doppelkupplungsgetriebe mit einer Vorrichtung zur Ansteuerung einer Mehrzahl hydraulischer Schaltzylinder**
Double clutch transmission with a device for controlling a number of hydraulic switching cylinders
Engrenage à double embrayage doté d'un dispositif de commande d'une multitude de cylindres à commutation hydraulique

(30) Priorität: 23.07.2007 DE 102007034200
(43) Veröffentlichungstag der Anmeldung: 28.01.2009
(73) Patentinhaber: Schaeffler Technologies GmbH & Co. KG, 91074 Herzogenaurach (DE)
(72) Erfinder: Dreher, Felix, 79219 Staufen im Breisgau (DE); Lang, Dietmar, 66989 Höheischweiler (DE); Staudinger, Martin, 76275 Ettlingen (DE)

(56) Entgegenhaltungen:
- EP-A1- 1 635 091
- EP-A1- 1 637 756
- DE-A1- 10 125 172
- DE-C1- 4 117 736

## Beschreibung

Die Erfindung betrifft ein Doppelkupplungsgetriebe mit einer Ansteuervorrichtung nach dem Oberbegriff des Anspruchs 1.

Aus der DE 10 2005 019 516 A1 ist eine Vorrichtung zur Ansteuerung hydraulischer Schaltzylinder bekannt, welche ein erstes Schieberventil mit einem mit Steuerdruck beaufschlagbaren Steuereingang enthält und einen mit Systemdruck beaufschlagbaren Systemdruckeingang; außerdem zwei Ausgängen und wenigstens einem Rücklaufausgang, wobei in Abhängigkeit von dem am Steuereingang anliegenden Druck wahlweise einer der beiden Ausgänge, ggf. über einen Druckregelmechanismus, mit dem Systemdruck und gleichzeitig der jeweils andere Ausgang mit dem Rücklaufausgang verbunden ist. An die Ausgänge des Schieberventils ist eine Ventileinrichtung angeschlossen, mittels derer die Schaltzylinder selektiv betätigbar sind.

Aus den Veröffentlichungen EP 1 635 091 A1, EP 1 637 756 A1, DE 101 25 172 A1 und DE 41 17 736 C1 sind Doppelkupplungsgetriebe mit wenigsten drei Schaltzylindern und einer Ansteuervorrichtung zur Ansteuerung der Schaltzylinder mit Hilfe von mindestens drei elektromagnetisch schaltbaren Wegeventilen ansteuerbar sind, bekannt geworden.

Die Druckschrift EP 1 635 091 wird als nächster Stand der Technik angesehen und offenbart die Merkmale des Oberbegriffs von Anspruch 1.

Außerdem ist eine hydraulische Steuerung zur Betätigung eines Doppelkupplungsgetriebes bekannt, bei der mehrere Schaltzylinder hydraulisch zur Schaltung von Gängen betätigt werden, die über eine Schaltventilanordnung mit Druck dadurch beaufschlagt werden könne, indem die Hydraulikzylinder zur Betätigung der beiden Kupplungen und die Schaltventilanordnung mit der Druckseite einer Druckeinrichtung verbunden sind. Zur Auslösung eines Schaltvorganges wählt ein Drehschieber die zu bewegende Schaltschiene aus. Die aus einem Doppeldruckregelventil bestehende Schaltventilanordnung wird über einen Proportionalenelektromagneten betätigt. Diese Schahventilanordnung öffnet in einem mittleren Bereich des steuernden Magnetstromes seine beiden mit dem Tank verbundenen Ausgangskanäle gegen diesen, so dass diese Kanäle drucklos werden. Für hohe Steuerströme regelt die Schaftventilanordnung den Druck im ersten Ausgangskanal, während der zweite Ausgangskanal gegen den Tank verbunden bleibt. Für niedrige Steuerströme dagegen regelt es den Druck im zweiten Ausgangskanal, während der erste Ausgangskanal mit dem Tank verbunden bleibt. Über einen Drehschieber werden die beiden Drücker auf beiden Seiten des jeweils doppelt wirkenden Zylinders, der entsprechend ausgewählten Schaltschiene, geleitet. Dabei werden die Schaltzylinder für die inaktiven Schaltschienen jeweils auf beiden Seiten mit dem gleichen Druck beaufschlagt, so dass sie sich nicht bewegen.

Zur Einreglung einer gewünschten Schaltschienenposition muss über den Magnetstrom die Schaltventilanordnung schnell zwischen den Bereichen kleinen Drucks am ersten Ausgangskanal und Bereichen kleinen Drucks am zweiten Ausgangskanal hin und her geregelt werden. Für die Bewegung des Ventilkolbens in der Schaltventilanordnung bedeutet das, dass sich dieser sehr schnell zwischen den beiden Steuerkanten der Ausgangskanäle hin und her bewegen muss. Zur Vermeidung von Leckage und damit Systemdruckverlust, müssen beide Positionen relativ weit von einander entfernt liegen, damit die Überdeckung an beiden Steuerkanten möglichst groß ist, weil sich, solange kein Gang geschaltet wird, der Ventilkolben zwischen diesen beiden Steuerkanten befinden muss, so dass sich kein Druck auf beiden Ausgangskanälen befindet.

Dieser lange Weg des Ventilkolbens zwischen beiden Steuerkanten bedeutet jedoch, insbesondere bei niedrigen Temperaturen, bei denen es zu hoher Reibung im Ventil durch viskoses Hydraulikfluid kommt, dass die Regelbarkeit der Schaltventilanordnung eingeschränkt ist. Ebenso führt dieser lange Weg aus der jeweiligen Ruhestellung bis zur Erreichung einer der Steuerkanten zu Verzögerungen auch beim reinen kraft- bzw. druckgesteuerten Einlegen eines Ganges.

Daher besteht die Aufgabe der Erfindung darin, eine Vorrichtung zur Ansteuerung einer Mehrzahl hydraulischer Schaltzylinder vorzuschlagen, bei der die Viskosität des Hydraulikfluids auch bei niedrigen Temperaturen keinen Einfluss auf die Regelbarkeit der Ansteuerung der Schaltzylinder hat und mit der die Geschwindigkeit zum Einlegen eines Ganges verbessert wird.

Diese Aufgabe wird mit einer Vorrichtung zur Ansteuerung einer Mehrzahl hydraulischer Schaltzylinder mit den Merkmalen des Anspruchs 1 gelöst. Vorteilhafte Weiterbildungen ergeben sich aus den abhängigen Unteransprüchen.

Die Erfindung wird nachfolgend anhand eines Ausführungsbeispiels und zugehöriger Zeichnungen näher erläutert.

Es zeigen:
Figur 1 einen erfindungsgemäßen Hydraulikplan,
Figur 2 die Druckverteilung an den Steuerkanten des Wegeventils A, in Abhängigkeit vom am Ventil anliegenden Magnetstrom bzw. der Ventilstellung,
Figur 3 den Hydraulikplan aus Figur 1 mit einer veränderten Schaltbelegung des Wegeventils B.

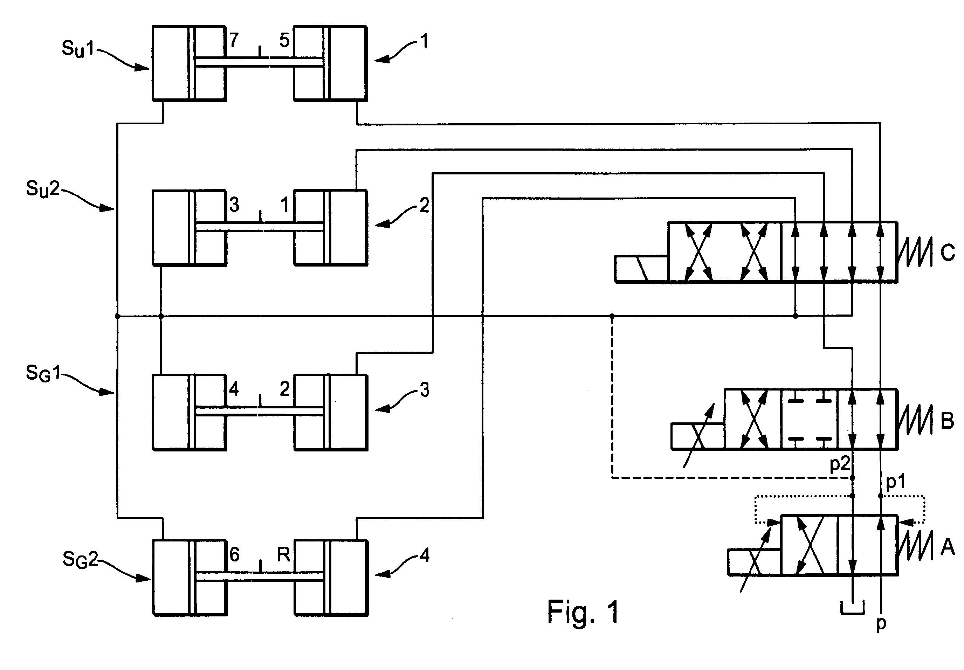

Figur 1 zeigt einen Hydraulikplan zur Ansteuerung von vier Schaltzylindern 1, 2, 3 und 4 eines Doppelkupplungsgetriebes. Ein Doppelkupplungsgetriebe setzt sich bekanntermaßen aus zwei Teilgetrieben zusammen, die von einer jeweils zugeordneten Aktorik hydraulisch angesteuert werden. Diese Aktorik besteht dabei im Wesentlichen aus einer entsprechenden Anzahl an Schaltschienen zur Gangauswahl. In diesem Beispiel sind zwei Schaltschienen S_{U}1, Sᵤ2 für das Teilgetriebe mit den ungeraden Gängen und zwei Schaltschienen S_{G}1, S_{G}2 für die geraden Gänge erforderlich. Jeder der vier Schaltschienen S_{U}1, S_{U}2, S_{G}1, S_{G}2 wird von einem Hydraulik- bzw. Schaltzylinder 1, 2, 3 und 4 angesteuert, der bekanntermaßen über zwei Endstellungen verfügt, so dass mit diesen vier Schaltschienen S_{U}1, S_{U}2, S_{G}1, S_{G}2 8 Gänge, also 7 Vorwärtsgänge und eine Rückwärtsgang schaltbar sind.

Die einzelnen Gänge werden von den Schaltzylindern 1, 2, 3 und 4 geschaltet. Bei diesem Ausführungsbeispiel schaltet der Schaltzylinder 1 die Gänge sieben und fünf, der Schaltzylinder 2 die Gänge drei und eins, der Schaltzylinder 3 die Gänge zwei und vier und der Schaltzylinder 4 den sechsten und den Rückwärtsgang. Wie bereits erwähnt, werden die Schaltzylinder 1, 2, 3 und 4 jeweils hydraulisch betätigt und besitzen zwei Endstellungen, die immer einem der beiden entsprechenden Gänge 1 bis 8 zugeordnet sind, sowie eine Mittelstellung, in der keiner der beiden jeweils zugeordneten Gänge eingelegt ist.

Aus Figur 1 geht hervor, dass die ungeraden Gänge 7, 5, 3 und 1 mit einer ersten, nicht dargestellten Getriebeeingangswelle, einer ersten, nicht dargestellten hydraulisch betätigten Kupplung, zusammen wirken. Entsprechend wirken die geraden Gänge 2, 4, 6 und der Rückwärtsgang mit einer zweiten, ebenfalls nicht dargestellten Getriebeeingangswelle, einer zweiten, nicht dargestellten hydraulisch betätigten Kupplung, zusammen.

Mittels einer in Figur 1 nicht dargestellten Pumpe, wird in einer Leitung und einer durch ein Vorsteuerventil geführten Leitung ein Systemdruck p erzeugt. Aus diesem Hydraulikplan in Figur 1 ist ersichtlich, dass ein Druckregler zwischen dem Systemdruck p und dem durch die Verbindung zu einem Tank gebildeten drucklosen Zustand, von einem Wegeventil A mit beliebig vielen Zwischenstellungen gebildet wird. Am einen Eingang dieses Wegeventils A liegt der Systemdruck p an und der andere Eingang ist mit dem Tank verbunden.

Mit Hilfe dieses Wegeventils A können wechselweise beide Eingänge mit Druck beaufschlagt werden, wobei der jeweils andere Eingang drucklos ist. Weiterhin verfügt dieses Wegeventil A über zwei Ausgänge und eine Mittelstellung M, in der auf keinen der Ausgänge Druck anliegt. In dieser relativ schmal ausgebildeten Mittelstellung M sind die Steuerkanten auf eine minimale Überdeckung ausgelegt, so dass in der Mittelstellung M alle vier Steuerkanten, Systemdruck p -p1, p1 -Tank, Systemdruck p - p2 sowie p2 - Tank ohne nennenswerten Mehrweg aktiv sind. Dies führt zu einer guten Steuerbarkeit und nur kurzen Verzögerungen beim Einlegen eines Ganges.

Da allerdings das Wegeventil A in dieser Mittelstellung M eine erhebliche Leckage aufweist, und die Druckdifferenz zwischen beiden Ausgängen gleich Null ist, lässt es sich nur schwer regeln. Aus diesem Grunde werden Zweiwegeventile B und C nachgeschaltet. Dabei übernimmt das Wegeventil B die Funktion des inaktiv Schaltens der entsprechenden Gangaktorik und damit die Funktion des Gangstellers, da dieses Wegeventil B drei Stellungen besitzt, die über einen Proportionalelektromagneten gesteuert werden.

Stromlos wird das Teilgetriebe mit den ungeraden Gängen ausgewählt, voll bestromt das Teilgetriebe mit den geraden Gängen. Ebenso gut kann die Zuordnung auch umgekehrt erfolgen. Bei mittlerer Bestromung werden jedoch sowohl die beiden Zuleitungen zum Gangsteller B als auch die beiden Eingänge abgesperrt. Das über einen Schaltelektromagneten gesteuerte Wegeventil C wählt wiederum innerhalb des durch Wegeventil B ausgewählten Teilgetriebes die entsprechende aktive Schaltschiene S_{U}1, S_{U}2, S_{G}1, S_{G}2 aus. Diese Ansteuerung funktioniert wie folgt.

Um eine bestimmte Schaltschiene S_{U}1, S_{U}2, S_{G}1, S_{G}2 zu bewegen, wird zunächst das Wegeventil C in die passende Stellung gebracht, dann das Wegeventil A in die Mittelstellung gebracht oder, zum Einlegen eines Ganges, sofort auf das gewünschte Druckniveau. Anschließend wird mit Wegeventil B, welches, so lange keine Schaltbewegung vonnöten ist, in seiner Mittelstellung verharrt, das entsprechende Teilgetriebe entsperrt. Ist der Ein- oder Auslegevorgang, bei dem der Druck und ggf. der Weg über das Wegeventil A geregelt werden, beendet, ist also somit die vorgesehene Position der Schaltschiene S_{U}1, S_{U}2, S_{G}1, S_{G}2, erreicht, wird zunächst das Wegeventil B in seine Mittelstellung gebracht. Nun kann sich die aktive Schaltschiene S_{U}1, S_{U}2, S_{G}1, S_{G}2 momentan nicht mehr bewegen. Anschließend werden die Wegeventile A und C stromlos geschaltet, um einerseits Strom zu sparen, andererseits die Leckage am Wegeventil A zu minimieren, da dieses in Ruhestellung oder Vollbestromung die größte Überdeckung gegen den Tank besitzt. Das Wegeventil B ist so auszulegen, dass die Überdeckungen zum Tank und den Nachbarstellungen in seiner Mittelstellung M möglichst groß ist.

In Figur 1 beaufschlagt der vom Wegeventil A ausgehende Druck p1 den Schaltzylinder 1 mit Druck, so dass der fünfte Gang eingelegt ist. Bei allen anderen Schaltzylindern 2, 3 und 4 herrscht an beiden Ein- bzw. Ausgängen der gleich hohe Druck p2, so dass die Schaltzylinder 2, 3 und 4 in ihrer Mittelstellung M verharren.

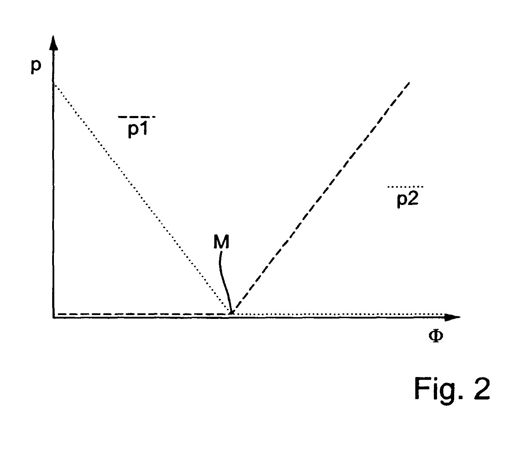

Figur 2 veranschaulicht die Steuerung des Schließkörpers zur Bildung der Steuerkanten innerhalb des Wegeventils A und damit des Systemdrucks p mittels eines Magnetstromes V, so dass dieser in zwei unterschiedlich hohe Drücke p1 und p2 aufgeteilt wird. In der Mittelstellung M des Wegeventils A, in sich die Steuerkanten minimal überdecken, und sich die beiden Drücke p1 und p2 kurzzeitig überlagern, sind alle vier Steuerkanten aktiv.

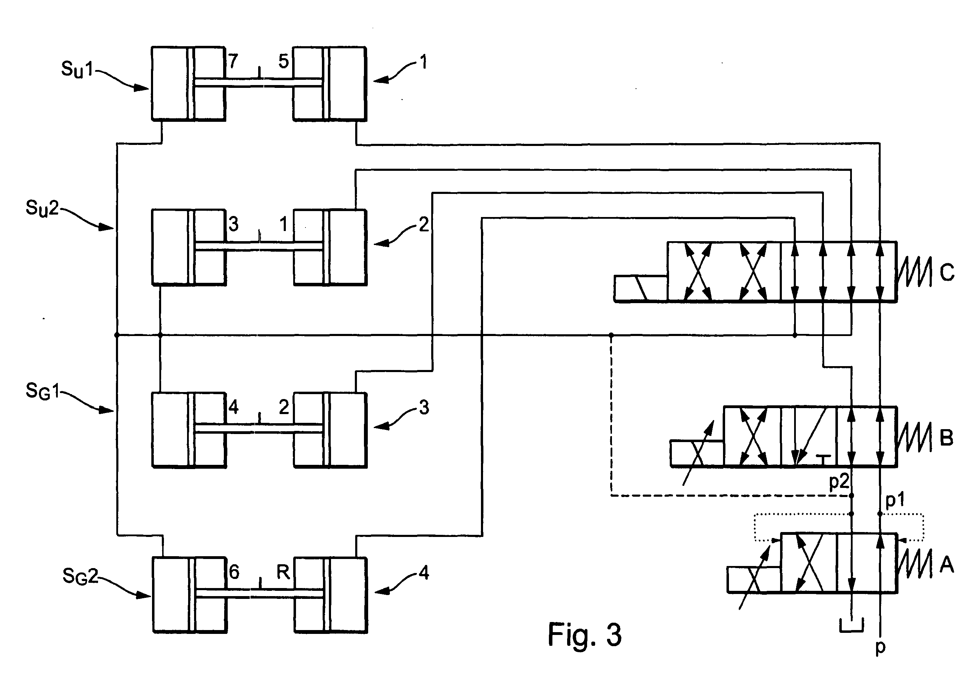

Figur 3 zeigt eine weitere Möglichkeit der Schaltbelegung des Wegeventils B auf, in der beide Drücke p1 und p2 mit dem Tank verbunden sind und somit das System stromlos ist.

### Bezugszeichenliste

- 1: Schaltzylinder
- 2: Schaltzylinder
- 3: Schaltzylinder
- 4: Schaltzylinder
- p: Systemdruck/Druck
- p1: Druck
- p2: Druck
- Φ: Magnetstrom
- M: Mittelstellung
- _{U}1: Schaltstange 1 ungerades Teilgetriebe
- S_{U}2: Schaltstange 2 ungerades Teilgetriebe
- S_{G}1: Schaltstange 1 gerades Teilgetriebe
- S_{G}2: Schaltstange 2 gerades Teilgetriebe
- A,B,C: Wegeventile (B Gangsteller)

## Patentansprüche

1. Doppelkupplungsgetriebe mit wenigstens drei, vorzugsweise vier Schaltzylindern (1, 2, 3, 4) und einer Ansteuervorrichtung zur Ansteuerung dieser Schaltzylinder (1, 2, 3, 4), wobei die Schaltzylinder (1, 2, 3, 4) mit Hilfe von mindestens drei elektromagnetisch schaltbaren Wegeventilen (A, B, C) ansteuerbar sind, wobei
an einem ersten Eingang eines ersten Wegeventils (A) ein Systemdruck (p) anliegt und ein zweiter Eingang mit einem Tank verbunden ist, wodurch ein hoher Druck (p1) an einem Ausgang und ein niedriger Druck (p2) an einem anderen Ausgang des Wegeventils (A) anliegt, und diese Drücke (p1, p2) an den Eingängen eines zweiten Wegeventils (B) anliegen, wobei der niedrige Druck (p2) außerdem an mindestens jedem Eingang der Steuerung der Schaltzylinder (1, 2, 3, 4) anliegt, **dadurch gekennzeichnet,**
**dass** die Drücke (p1, p2) an drei Eingängen eines dritten Wegeventils (C) anliegen, wobei ein Eingang direkt mit dem ersten Wegeventil (A) und je einer Wirkungsfläche jedes Schaltzylinders (1, 2, 3, 4) verbunden ist und die beiden anderen Eingänge mit beiden Ausgangskanälen des zweiten Wegeventils (B) verbunden sind.

2. Doppelkupplungsgetriebe nach Anspruch 1, **dadurch gekennzeichnet, dass** das erste Wegeventil (A) als Druckregler fungiert.

3. Doppelkupplungsgetriebe nach Anspruch 2, **dadurch gekennzeichnet, dass** das erste Wegeventil (A) über eine Mittelstellung (M) verfügt, in der die vier Steuerkanten eine minimale Überdeckung erreichen.

4. Doppelkupplungsgetriebe nach Anspruch 3, **dadurch gekennzeichnet, dass** in der Mittelstellung (M) des ersten Wegeventils (A) die Steuerkanten Systemdruck (p -p1), (p1) -Tank, Systemdruck (p -p2) sowie (p2) -Tank aktiv sind.

5. Doppelkupplungsgetriebe nach Anspruch 1, **dadurch gekennzeichnet, dass** jeweils einer der Schaltzylinder (1, 2, 3, 4) mit einem hohen Druck (p1) beaufschlagt wird und die anderen Schaltzylinder (1, 2, 3, 4) mit einem jeweils gleich großen niedrigen Druck (p2) beaufschlagt werden.

## Claims

1. Double clutch transmission having at least three, preferably four shift cylinders (1, 2, 3, 4) and having an actuating device for actuating said shift cylinders (1, 2, 3, 4), wherein the shift cylinders (1, 2, 3, 4) can be actuated by means of at least three electromagnetically switchable directional control valves (A, B, C), wherein
a system pressure (p) prevails at a first inlet of a first directional control valve (A), and a second inlet is connected to a tank, as a result of which a high pressure (p1) prevails at one outlet and a low pressure (p2) prevails at another outlet of the directional control valve (A), and said pressures (p1, p2) prevail at the inlets of a second directional control valve (B), wherein the low pressure (p2) also prevails at at least each inlet of the controller of the shift cylinders (1, 2, 3, 4), **characterized**
**in that** the pressures (p1, p2) prevail at three inlets of a third directional control valve (C), wherein one inlet is connected directly to the first directional control valve (A) and to in each case one active surface of each shift cylinder (1, 2, 3, 4), and the two other inlets are connected to both outlet ducts of the second directional control valve (B).

2. Double clutch transmission according to Claim 1, **characterized in that** the first directional control valve (A) functions as a pressure regulator.

3. Double clutch transmission according to Claim 2, **characterized in that** the first directional control valve (A) has a middle position (M) in which the four control edges attain minimum overlap.

4. Double clutch transmission according to Claim 3, **characterized in that**, in the middle position (M) of the first directional control valve (A), the control edges system pressure (p-p1), (p1) -tank, system pressure (p-p2) and (p2)-tank are active.

5. Double clutch transmission according to Claim 1, **characterized in that** in each case one of the shift cylinders (1, 2, 3, 4) is acted on with a high pressure (p1) and the other shift cylinders (1, 2, 3, 4) are acted on with a low pressure (p2) of in each case equal magnitude.

## Revendications

1. Transmission à double embrayage comprenant au moins deux, de préférence quatre cylindres de commutation (1, 2, 3, 4) et un dispositif de commande pour commander ces cylindres de commutation (1, 2, 3, 4), les cylindres de commutation (1, 2, 3, 4) pouvant être commandés à l'aide d'au moins trois distributeurs à commande électromagnétique (A, B, C),
une pression de système (p) étant appliquée à une première entrée d'un premier distributeur (A) et une deuxième entrée étant connectée à un réservoir, de sorte qu'une pression élevée (p1) s'applique à une sortie et qu'une pression plus basse (p2) s'applique à une autre sortie du distributeur (A), et ces pressions (p1, p2) s'appliquant aux entrées d'un deuxième distributeur (B), la pression plus basse (p2) s'appliquant aussi à au moins chaque entrée de la commande des cylindres de commutation (1, 2, 3, 4),
**caractérisée en ce que**
les pressions (p1, p2) s'appliquent aux trois entrées d'un troisième distributeur (C), une entrée étant connectée directement au premier distributeur (A) et à une surface active respective de chaque cylindre de commutation (1, 2, 3, 4), et les deux autres entrées étant connectées aux deux canaux de sortie du deuxième distributeur (B).

2. Transmission à double embrayage selon la revendication 1, **caractérisée en ce que** le premier distributeur (A) sert de régulateur de pression.

3. Transmission à double embrayage selon la revendication 2, **caractérisée en ce que** le premier distributeur (A) dispose d'une position centrale (M) dans laquelle les quatre arêtes de commande atteignent un recouvrement minimal.

4. Transmission à double embrayage selon la revendication 3, **caractérisée en ce que** dans la position centrale (M) du premier distributeur (A), les arêtes de commande pression du système (p-p1), (p1)-réservoir, pression du système (p-p2) et (p2)-réservoir sont activées.

5. Transmission à double embrayage selon la revendication 1, **caractérisée en ce qu'**à chaque fois l'un des cylindres de commutation (1, 2, 3, 4) est sollicité avec une pression élevée (p1) et les autres cylindres de commutation (1, 2, 3, 4) sont sollicités avec une pression basse respective de même valeur (p2).
